# FASCICULE DE BREVET EUROPEEN

(11) **EP 0 610 414 B1**
(45) Date de publication et mention de la délivrance du brevet: **03.01.1996**
(21) Numéro de dépôt: 92923861.6
(22) Date de dépôt: 27.10.1992
(51) Int. Cl.: G01C 21/20

(54) **LECTEUR DE CARTES NUMERISEES PORTABLE**
TRAGBARES LESEGERÄT FÜR DIGITALE KARTEN
PORTABLE DIGITAL MAP READER

(30) Priorité: 30.10.1991 FR 9113345
(43) Date de publication de la demande: 17.08.1994
(73) Titulaire: BERTRAND, Georges, F-94120 Fontenay-sous-Bois (FR)
(72) Inventeur: BERTRAND, Georges, F-94120 Fontenay-sous-Bois (FR)
(74) Mandataire: Thévenet, Jean-Bruno
(86) Numéro de dépôt international: FR9201002
(87) Numéro de publication internationale: WO9309401

(56) Documents cités:
- EP-A- 0 355 232
- DE-A- 3 933 458
- FR-A- 2 634 707
- US-A- 4 312 577
- US-A- 4 570 227
- US-A- 4 694 583
- US-A- 4 812 980
- PATENT ABSTRACTS OF JAPAN vol. 4, no. 163 (P-36)(645) 13 Novembre 1980 & JP-A-55 112 508

## Description

### LECTEUR DE CARTES NUMERISEES PORTABLE

La présente invention concerne un appareil autonome et léger permettant de lire des cartes numérisées et d'y associer des informations localisées en lieu et place des cartes géographiques, notamment topographiques ou routières, en papier et des guides.

La carte papier présente de nombreux inconvénients et limites notamment :
- elle est malcommode (son encombrement n'en facilite pas la manipulation),
- elle est fragile (du fait des manipulations multiples),
- elle est discontinue (plusieurs cartes sont nécessaires pour couvrir un territoire donné),
- sa capacité d'information est limitée (une carte surchargée est illisible) interdisant notamment l'accès à des informations localisées complémentaires (la carte doit être complétée par un guide),
- sa mise à jour est impossible (une carte papier périmée doit être jetée),
- son échelle est fixe (il faut changer de carte pour changer d'échelle).

Il est connu des systèmes de navigation et d'aide à la conduite automobile, comme par exemple par la demande de brevet DE-A-3 933 458, qui calculent la position d'un mobile sur un fond de carte routière numérisée. Toutefois, ces systèmes sont techniquement complexes, faisant par exemple appel àune infrastructure routière spécifique, sont coûteux, non autonomes et ne correspondent qu'à un usage très limité d'une carte géographique ou d'un plan en papier.

Au contraire, la présente invention se propose de réaliser un dispositif autonome, simple d'utilisation, peu coûteux et permettant une consultation de cartes géographiques ou routières numériques en tous lieux, cette consultation étant facilitée par l'orientation constante de la carte visualisée, en fonction du déplacement de l'utilisateur.

Un autre but de l'invention est de permettre tous les traitements d'affichage, de mise à jour, d'édition, de mémorisation et de calcul topologique aujourd'hui impossibles avec une carte papier.

Ces buts sont atteints par un appareil de lecture de cartes géographiques, notamment topographiques ou routières, numérisées et enregistrées sur supports magnétique ou optique comprenant, d'une manière connue en soi, une unité centrale de traitement, des moyens de lecture des supports magnétique ou optique, au moins un écran d'affichage, des moyens de commande et des moyens d'alimentation électrique, caractérisé en ce qu'il comporte, en outre, un compas adapté à mesurer l'angle entre l'orientation de l'appareil et le nord magnétique et à adresser à l'unité centrale une information correspondante, ladite unité centrale envoyant, en fonction de cette information, un ordre correspondant au processus d'affichage à l'écran pour orienter l'image affichée en fonction de cette information.

Cette orientation de la carte permet ainsi à l'utilisateur de se repérer automatiquement dans l'espace et de voir sans risque de confusion sur l'écran d'affichage, lorsqu'il tient l'appareil en main devant lui, la topographie des lieux qui lui font face.

Avantageusement, cet appareil portable autonome comporte deux écrans d'affichage susceptibles d'afficher, l'un, une portion de la carte numérisée, l'autre une quelconque autre information (carte, texte, image, icône).

Il est ainsi possible d'associer à certains lieux affichés sur le premier écran des informations multimédia (sons, textes, images) visibles au niveau du second écran et utiles au promeneur, au touriste (visualisation et description de point de vue, de sites, de monuments, fourniture d'une liste d'hôtel, de restaurants, d'équipements, etc..), au professionnel (adresses, ressources, etc..) ou encore au visiteur (expositions, musées, etc..).

Avantageusement, le dispositif selon l'invention est alimenté de façon autonome par pile(s) ou batterie et est portable. A bord d'un véhicule, cette alimentation peut être réalisée directement à partir de la batterie.

De préférence, il comporte des moyens permettant d'enregistrer et de restituer des informations multimédia localisées, ainsi que des moyens permettant d'enregistrer et d'afficher un itinéraire calculé ou réalisé, avec notamment ses caractéristiques de temps, de distance, de dénivellation.

Dans sa version professionnelle, il peut comporter des moyens permettant d'afficher et d'enregistrer sur la carte numérisée des informations de toute nature liées à un répertoire ou à un agenda.

D'autres caractéristiques et avantages de la présente invention ressortiront mieux à la lecture de la description suivante qui sera faite en référence aux dessins annexés sur lesquels :
- la figure 1 représente un exemple de réalisation d'un lecteur de cartes géographiques, topographiques ou routières numérisées à deux écrans,
- la figure 2 représente un exemple de réalisation du tableau de commande du lecteur de la figure 1,
- la figure 3 montre la structure interne d'un lecteur selon l'invention,
- la figure 4 représente une variante de réalisation d'un lecteur de cartes numérisées comportant un seul écran,
- la figure 5 est un synoptique simplifié de l'organisation fonctionnelle du dispositif selon l'invention,
- la figure 6 montre à échelle identique, la rotation d'un angle α de la carte visualisée, résultant de la rotation du dispositif,
- la figure 7 est un premier exemple de visualisation possible au niveau de l'écran d'affichage, et
- la figure 8 est un second exemple de visualisation après rotation du dispositif et changement d'échelle.

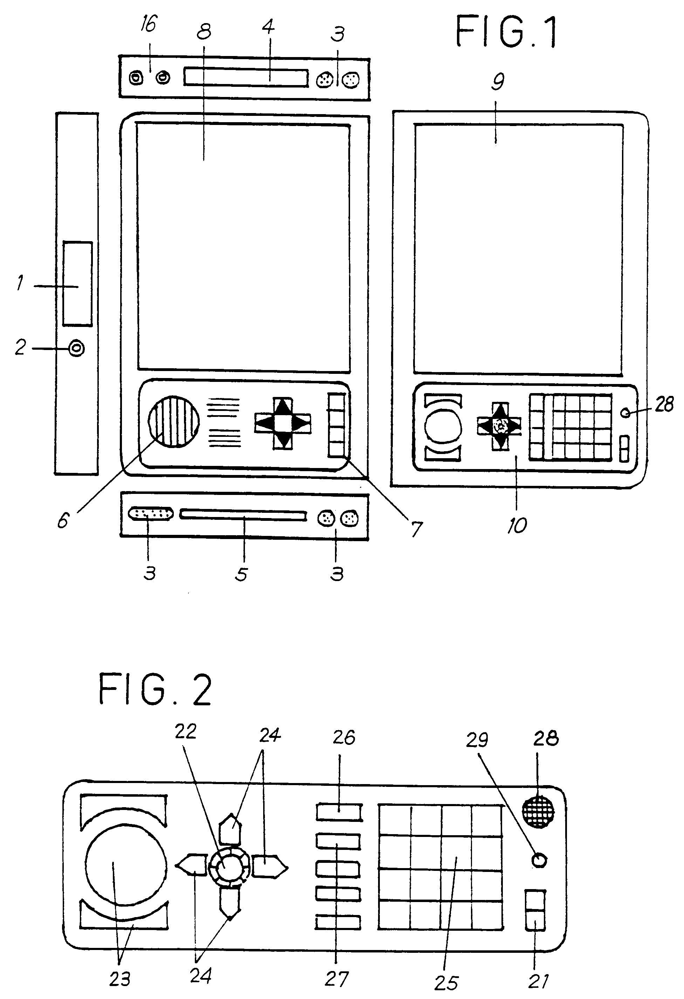

La figure 1 présente, selon l'invention, un lecteur de cartes numérisées à deux écrans constitué de deux parties comportant chacune un écran et qui peuvent être séparées et assemblées par encliquetage (clipsables). La partie gauche contient une batterie 1, un circuit d'alimentation électrique 2, plusieurs connecteurs d'entrée/sortie et prises notamment pour casque audio 16 , un lecteur optique 4, un lecteur enregistreur magnétique 5, un haut parleur 6, un clavier de commande 7 et un écran plat 8. La partie droite comprend un écran avantageusement tactile 9 et un tableau de commande 10 muni notamment d'un microphone 28. En position fermée, la partie droite vient recouvrir la partie gauche.

La figure 2 présente en détail le tableau de commande de la figure 1. Celui-ci comporte:
- une touche marche/arrêt 21 et son voyant de contrôle associé 29,
- une commande de zoom (changement d'échelle) par bouton, touches, curseur ou tout autre dispositif 22,
- une boule de déplacement du curseur (trackball) ou tout autre dispositif 23 permettant le positionnement et l'action du curseur sur l'écran,
- des touches de défilement 24 de l'écran. Ces touches peuvent être remplacées par un manche à balai (joystick) ou tout autre dispositif,
- un pavé numérique permettant d'entrer des chiffres ou des codes 25,
- une touche de mémorisation 26,
- des touches de fonctions 27 programmables, et le microphone 28.

Un clavier peut en outre être ajouté pour les applications professionnelles (gestion de fonctions agendas, répertoire, etc..).

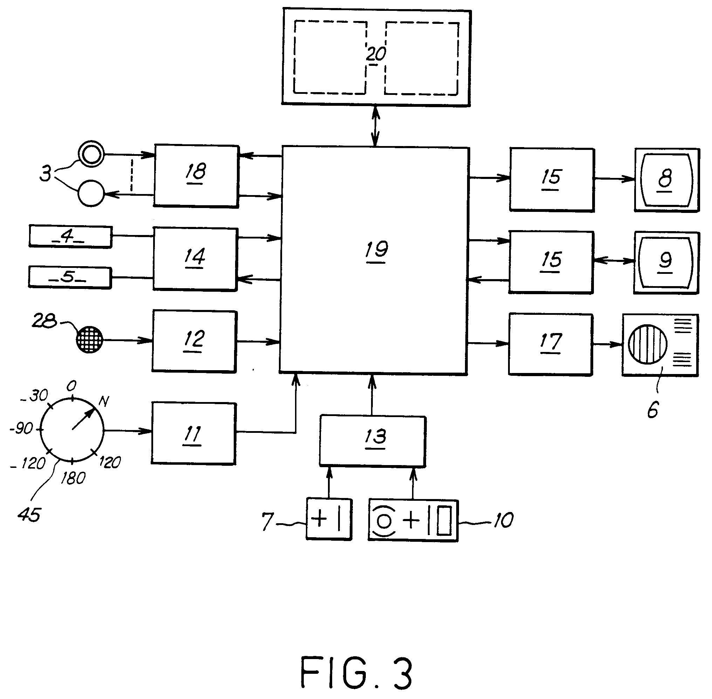

La structure interne du dispositif selon l'invention sera décrite en regard de la figure 3. Cette structure est organisée autour d'une unité centrale de traitement 19 et de mémoires associées 20 (mémoire de données et mémoire de programme) selon une structure classique à microprocesseur. Des interfaces spécifiques assurent une liaison avec les différents éléments du dispositif : une interface de mesure 28 pour la gestion d'un compas 45, deux interfaces écran 15 pour la gestion des écrans d'affichage 8 et 9, une interface clavier 13 pour la gestion des clavier et tableau de commande 7 et 10, une interface haut parleur 17 pour la gestion du haut parleur 6, une interface micro 12 pour la gestion de l'entrée microphone 11, une interface lecteurs 14 pour la gestion des lecteurs numérique ou analogique 4 et 5, et une interface entrée/sortie 18 pour la liaison avec les différents connecteurs et prises externes 3.

L'autonomie du dispositif est assurée par une alimentation électrique, non représentée, autonome qui peut être constituée par une batterie munie avantageusement d'un dispositif de protection de niveau de charge. Pour permettre l'utilisation du dispositif en tous lieux, il pourra être prévu une prise 12V pour un branchement dans un véhicule automobile ou une prise secteur pour un branchement au niveau d'une habitation ou d'un bureau.

Toutes les commandes sont accessibles par la boule (trackball) (ou son substitut) en cliquant sur des icônes (barres de menus, ascenceurs, palette flottante, etc..). Un accès direct à ces icônes peut être obtenu à partir de l'écran tactile 9 lorsque celui-ci est disponible. Le microphone 28 permet d'enregistrer des commandes vocales ou des sons à mémoriser.

Les mémoires 20 qui comprennent notamment des mémoires de masse permettent de stocker les informations cartographiques ou mutimédia numérisées (ou analogiques), les programmes et les informations en attente d'édition. Ces organes de stockage peuvent être de toute nature (magnétique, optique, optomagnétique, etc..) et de tout format (carte, disquette, disque, etc..).

Les connecteurs et prises d'entrée/sorties permettent, outre les liaisons définies précédemment, des liaisons avec des périphériques (imprimante, traceur, écran externe, téléviseur, scanner, appareil photo numérique, camescope, etc..), avec des réseaux, avec d'autres ordinateurs ou bien encore avec d'autres lecteurs de cartes numérisées.

L'unité centrale de traitement 19 comprend notamment un ou plusieurs processeurs (calcul, optimisation, simulation topologique, compression, etc..) ainsi qu'une base de temps permettant d'afficher la date et l'heure et de procéder aux calculs de temps sur itinéraires. Elle coopère avec le compas 45 permettant de mesurer l'angle entre l'orientation de l'appareil et le nord magnétique.

Cette structure permet à travers un appareil portable et autonome, une grande variété de fonctions cartographiques comme par exemple : affichage, défilement (à droite, à gauche, etc..), zoom (changement d'échelle), calcul d'itinéraires (avec calcul de la distance, de la durée, de la denivellation, etc..), analyse (affichage de couches thématiques : données géologiques ou hydrologiques par exemple), édition des itinéraires calculés et des principales difficultés qu'ils comportent (carrefours, bifurcations, etc..), enregistrement des itinéraires parcourus et des temps réalisés, enregistrement de textes, sons et images liés à une localisation. De même, des fonctions spécifiques peuvent être développées à l'usage de certaines catégories d'utilisateurs, de professions, d'entreprises, etc..(agenda, répertoire, dictionnaire, mémos..).

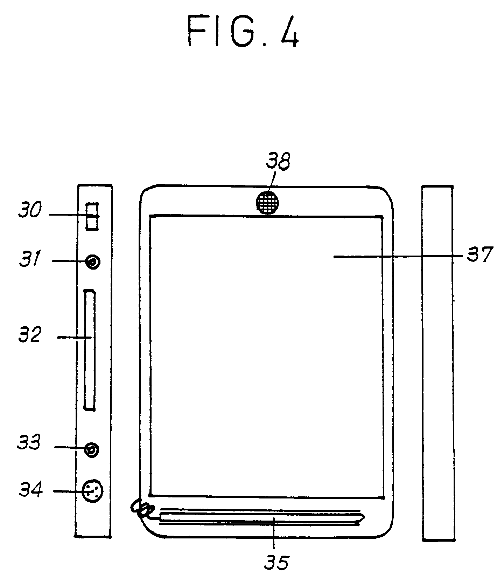

La figure 4 donne un exemple de réalisation mono-écran. Ce dispositif comprend un bouton marche-arrêt 30, une entrée 12V 31, un lecteur enregistreur 32, une prise casque 33, un connecteur d'entrée/sortie 34, un crayon optique 35 pour activer un écran tactile 37, et un microphone 38. Dans cet exemple de réalisation, les fonctions guide, répertoire, agenda, etc.. s'affichent à travers de fenêtres qui recouvrent en partie la carte numérisée apparaissant également à l'écran.

Un format classique pour le dispositif selon l'invention peut être l'un des formats A4 et A5, mais toutes les dimensions sont possibles dès lors que la lisibilité est conservée et que le dispositif ne présente pas un poids excessif incompatible avec un dispositif autonome et portable.

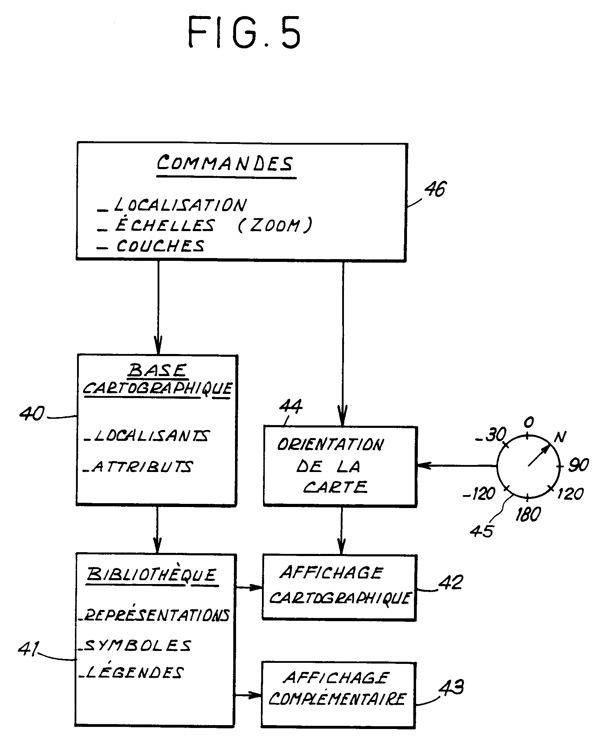

Le fonctionnement du dispositif selon l'invention sera maintenant décrit en regard des figures 5 à 8.

Le lecteur de cartes numérisées portable affiche des informations cartographiques et des informations complémentaires qui peuvent apparaître sur un ou plusieurs écrans.

Les fonctions de base du dispositif (visualisation de cartes, guides, optimisation et suivi d'itinéraires, agenda, répertoire) peuvent être complétées par des fonctions spécifiques à des activités professionnelles ou de loisir.

La très grande capacité de stockage des systèmes optique ou magnétique permet d'enregistrer des informations très complètes : hôtels, restaurants, bars, stations services et garages, police et gendarmerie; services médicaux, informations touristiques ou professionnelles de toute nature, horaires des trains et des avions , fréquence FM, numéros de téléphone utiles etc...

Ces informations sont stockées avec la base de données cartographiques et peuvent aller très loin dans la description des prestations disponibles (jours et heures d'ouverture, menus, prix, heures des visites guidées, programmes etc...) ; La supériorité par rapport aux cartes et guides papier est écrasante tant pour la quantité de l'information que pour la facilité et la rapidité d'accès et de recherche (notamment avec la liaison dynamique entre la carte et le guide qui permet par exemple de répondre à la question suivante : liste des hôtels deux étoiles situés à moins de 10 minutes de marche).

Pour cela, cette base de données 40 composée d'objets géographiques, un objet peut être une ville, un quatier, un monument etc...) est organisée de telle sorte qu'elle autorise d'une part un affichage sur plusieurs échelles (zoom) et d'autre part une lisibilité des légendes des cartes affichées à toutes échelles (dès lors que l'on adopte un format unique pour les légendes) et cela quel que soit l'angle d'affichage de la carte. En outre, la sélection et la combinaison de certaines catégories d'objets sont facilitées par une organisation en couches, un objet pouvant relever de plusieurs couches.

Un des moyens d'organisation d'une telle base consiste à associer à chaque objet géographique les deux éléments suivants :
- des localisants permettant de gérer la topologie (position et forme de l'objet) :
   - centroïde repéré dans un système de coordonnées,
   - points, segments, polygones, courbes, etc...
   - adjacence, continuité, inclusion, intersection, etc...
- des attributs identifiant et décrivant l'objet :
   - nom,
   - type d'objet (par référence à une nomenclature),
   - numéros de niveau (un objet peut figurer à plusieurs niveaux),
   - numéros de couche (un objet peut relever de plusieurs couches),
   - caractères (taille, altitude, typologie...),
   - description et contenu des objets,

Pour la description des objets, les attributs peuvent être constitués de textes, d'images fixes ou animées et/ou de sons.

A chaque objet est associée une représentation graphique qui peut être complétée par un ou plusieurs symboles et par une légende, l'ensemble de ces éléments étant disponibles dans une bibliothèque 41 coopérant avec la base de données 40.

La représentation graphique dépend du type d'objet, de sa position et, le cas échéant, de sa forme et de ses caractères. Sa taille varie avec l'échelle (Zoom) et elle suit l'orientation 44 commandée par le compas 45.

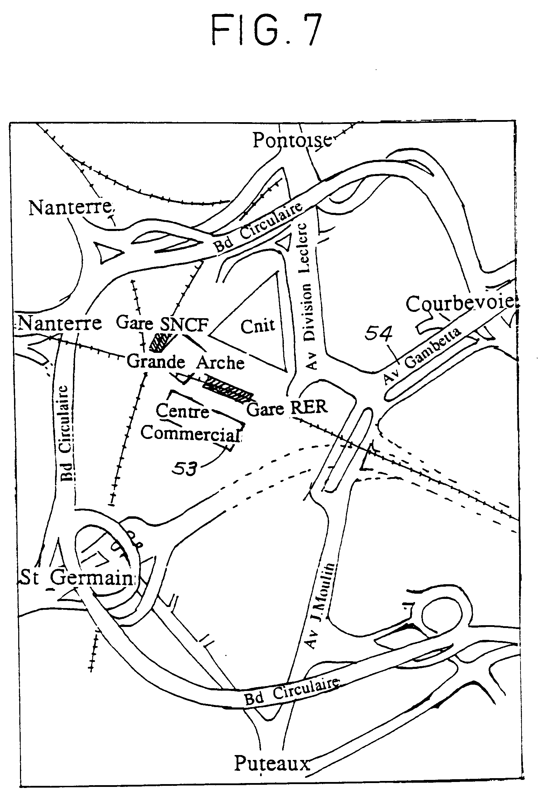

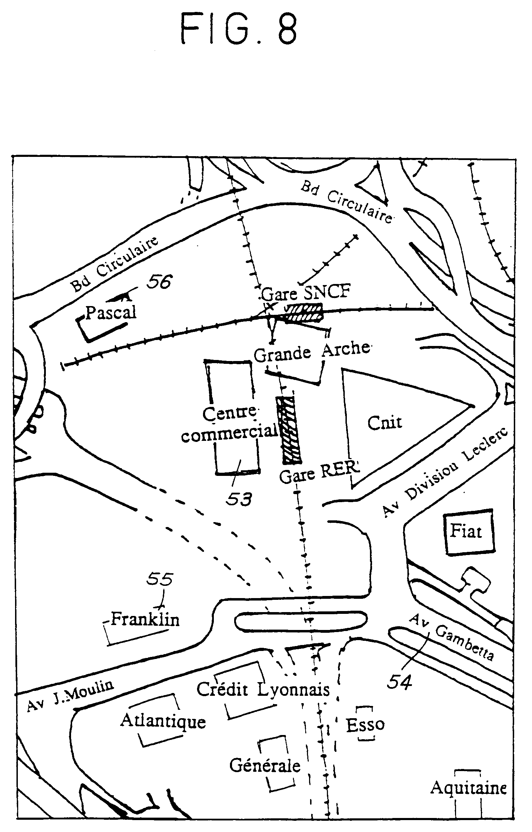

Les symboles et les légendes sont de taille fixe et sont affichés horizontalement pour en faciliter la perception. Les légendes associées à des segments de réseau pourront être affichées parallèlement à ces segments (voir par exemple la référence 54 des figures 7 et 8).

Les symboles sont fonction du type d'objet et, le cas échéant, de ses caractères et du contenu de ses attributs (présence d'un notice, d'illustrations, de séquences animées ou sonores...). Les légendes affichent le nom de l'objet dans un caractère, un corps, un couleur et un style qui dépendent du type et des caractères de cet objet.

Une commande d'affichage 46 permet de sélectionner dans la base 40, pour une ou plusieurs localisations et une ou plusieurs échelles, les objets correspondant aux couches choisies. Les représentations, symboles et légendes associés à ces objets sont alors extraits de la bibliothèque 41 et affichés 42, 43 sur les écrans correspondants (ou dans les fenêtres qui leur ont été assignées dans le cas d'une réalisation mono-écran). De plus, un accès aux informations non affichées (attributs détaillés) est possible par déplacement d'un curseur sur le symbole ou la légende concernée.

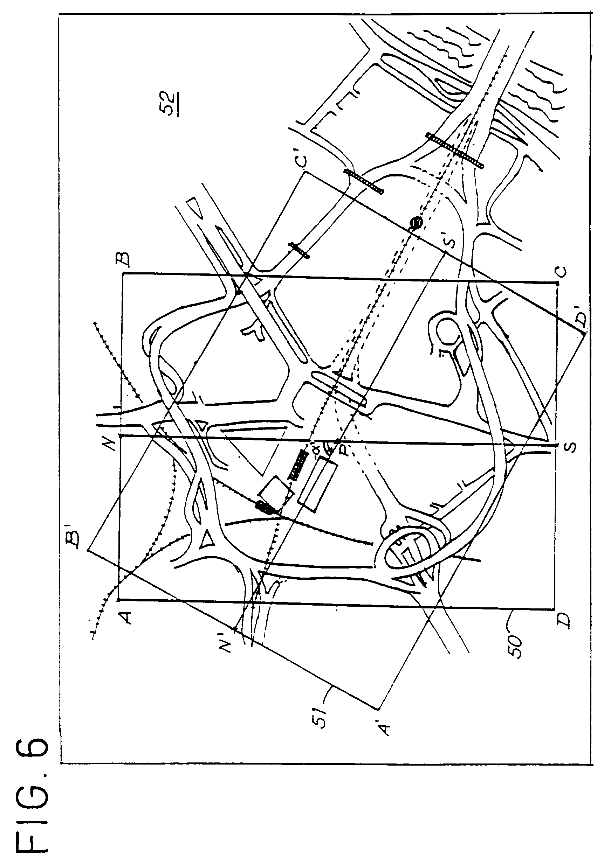

La figure 6 a pour objet de montrer l'influence d'un changement d'orientation du dispositif sur la visualisation des données cartographiques.

Un des objets du présent dispositif est de faire coïncider le Nord affiché sur la carte avec le Nord géographique réel, indépendamment de la verticale de l'écran d'affichage. Aussi, le dispositif comprend-t-il le compas 45 comme moyen de mesurer l'orientation de l'appareil portable et de transmettre en conséquence les instructions d'affichage permettant d'afficher la carte en fonction de cette orientation, c'est-à-dire de commander l'axe d'affichage de cette carte.

Le compas mesure l'angle α entre le Nord magnétique et la verticale de l'écran d'affichage (avec le signe plus pour la droite et le signe moins pour la gauche).

La base de données géographiques contient les valeurs E de l'écart entre le Nord magnétique et le Nord géodésique pour les cartes à afficher. Cette valeur peut être une constante pour un pays ou un groupe de pays.

L'angle de rotation de la carte est alors donné par α' = α + E.

Si l'on considère une configuration mono-écran avec une fenêtre d'affichage 52, pour une localisation P déterminée par ses coordonnées x,y dans cette fenêtre F caractérisée par une hauteur H et une largeur L et pour une échelle donnée, sont affichés les objets compris dans le rectangle 50 (ABCD) selon des procédures d'affichage classiques.

L'axe vertical NS indique le Nord et le Sud tels qu'ils figurent au niveau de la carte numérisée.

Si l'angle α' est différent de 0, un nouveau rectangle 51 (A',B',C',D') est calculé par rotation d'un angle α' autour du point P. La verticale N'S' de ce rectangle n'indique plus le Nord mais la direction dans laquelle l'appareil est orienté. Le rectangle 51 (A',B',C',D') est alors affiché dans la fenêtre F après avoir subi une rotation en sens inverse d'un angle α' autour du point P.

Les figures 7 et 8 montrent deux exemples de visualisation de données cartographiques.

Sur la figure 7, il peut être observé que certains symboles 53 sont affichés horizontalement alors que d'autres 54 sont affichés parallèlement au réseau routier qu'ils définissent.

Sur la figure 8 qui représente une partie agrandie de la figure 7 après rotation de l'angle α', il peut être remarqué que la taille des légendes est restée la même et que celles-ci restent affichées horizontalement malgré la rotation de la carte. Seules les données associées à une orientation (voir la référence 54) ont fait l'objet d'une rotation identique d'un angle α'. Il est important de noter également que cet agrandissement (zoom) a fait apparaître de nouveaux objets comme par exemple ceux référencés 55 ou 56, cette faculté étant possible du fait de l'organisation en niveaux des informations cartographiques. En effet, il est défini pour chaque objet un niveau qui correspond au seuil d'apparition de cet objet, c'est-à-dire l'échelle à partir de laquelle celui-ci est visualisé à l'écran.

Il a pu donc être observé que le dispositif selon l'invention présente de multiples avantages : de par son autonomie, il peut être utilisé aussi bien au bureau, au domicile qu'à l'intérieur d'un véhicule, il peut accompagner n'importe quel type de déplacement (marche, vélo, voile, cheval etc...) ; de par sa puissance, il offre un accès rapide, facile et interactif à des données très fines et variées. C'est particulièrement utile pour la fonction "guide", les guides actuels sur papier étant très pauvres pour des raisons d'encombrement et ne pouvant lier dynamiquement le texte et les cartes ; de par ses grandes facultés de personnalisation, il est possible de disposer de fonctions spécifiques à certaines entreprises, à certains métiers, à certaines activités de loisirs, des optimisations de trajets pouvant être paramétrées de manière complexe pour tenir compte des choix et des contraintes de chacun ; enfin, de par ses fonctionnalités mêmes, il est spécialement adapté à une utilisation grand public voire ludique (chasse au trésor) sans toutefois écarter une utilisation professionnelle que vient renforcer la présence possible des fonctions agenda et répertoire qui facilitent la préparation des voyages d'affaire (il a été vu en outre , qu'il est possible d'adapter un clavier externe au dispositif).

Il est intéressant de noter que la puissance du lecteur portable autonome peut être renforcée par l'adjonction d'un appareil de localisation globale GPS pour permettre une détermination du positionnement et d'un altimètre pour la mesure de l'altitude, ces deux éléments complémentaires étant particulièrement utiles pour des déplacements en milieu naturel ou dans des secteurs peu ou pas balisés (rallye-raid par exemple).

## Revendications

1. Appareil portable d'affichage de cartes numérisées géographiques, notamment de cartes topographiques ou routières, enregistrées sur supports magnétique ou optique comprenant, d'une manière connue en soi, une unité centrale de traitement (19) associée à des mémoires (20) et des interfaces d'entrée-sortie (11 à 17), des moyens de lecture de ces supports magnétique ou optique (4,5), au moins un écran d'affichage (8,9) de la carte numérisée, des moyens de commande (7,10) et des moyens d'alimentation électrique, caractérisé en ce qu'il comporte, en outre, un compas (45) adapté à mesurer l'angle entre l'orientation de l'appareil et le nord magnétique et à adresser à l'unité centrale (19) une information correspondante, ladite unité centrale envoyant, en fonction de cette information, un ordre correspondant au processus d'affichage à l'écran pour orienter l'image affichée en fonction de cette information, à l'exception d'une partie des symboles et légendes qui sont maintenus horizontaux pour en faciliter la lecture, les légendes ou symboles associés à des segments du réseau routier ou topographique enregistré étant affichés de préférence parallèlement à ces segments.

2. Appareil selon la revendication 1, caractérisé en ce qu'il comporte deux écrans d'affichage (8,9) susceptibles d'afficher, l'un, une portion de la carte numérisée, l'autre une quelconque autre information telle qu'une autre carte, un texte, une image ou une icône.

3. Appareil selon la revendication 1 ou la revendication 2, caractérisé en ce que l'affichage de la carte est organisé en plusieurs niveaux afin de permettre un affichage sélectif des objets constituant cette carte selon l'échelle retenue, les symboles et légendes étant soumis à un traitement spécifique déterminé.

4. Appareil selon l'une quelconque des revendications 1 à 3, caractérisé en ce qu'il est alimenté de façon autonome par pile(s) ou batterie.

5. Appareil selon l'une quelconque des revendications 1 à 3, caractérisé en qu'il est susceptible d'être embarqué à bord d'un véhicule, l'alimentation électrique du dispositif étant alors assurée à partir de la batterie de ce véhicule.

6. Appareil selon l'une quelconque des revendications 1 à 5, caractérisé en ce qu'il comprend des moyens permettant d'enregistrer et de restituer des informations multimédia localisées.

7. Appareil selon l'une quelconque des revendications 1 à 6, caractérisé en ce qu'il comprend des moyens permettant d'enregistrer et d'afficher un itinéraire calculé ou réalisé, avec notamment ses caractéristiques de temps, de distance, de dénivellation.

8. Appareil selon l'une quelconque des revendications 1 à 7, caractérisé en ce qu'il comprend des moyens permettant d'afficher et d'enregistrer sur la carte numérisée des informations de toute nature liées à un répertoire ou à un agenda.

## Patentansprüche

1. Tragbare Vorrichtung für die Anzeige von digitalisierten geographischen Karten, insbesondere von topographischen oder Straßenkarten, die auf einem magnetischen oder optischen Träger gespeichert sind, mit einer an sich bekannten Zentraleinheit (19), die mit Speichern (20) und einer Eingabe/Ausgabe-Schnittstelle (11 - 17) verbunden ist, einer Leseeinrichtung für die magnetischen oder optischen Träger (4, 5), zumindest einem Anzeigeschirm (8, 9) für die digitalisierte Karte, einer Steuereinrichtung (7, 10) und Einrichtung für die Versorgung mit elektrischer Energie,
gekennzeichnet durch
einen Kompaß (45), der zur Messung des Winkels zwischen der Ausrichtung der Vorrichtung und magnetisch Nord ausgelegt ist und der Zentraleinheit (19) eine entsprechende Information zuführt, wobei die Zentraleinheit in Abhängigkeit von dieser Information einen entsprechenden Befehl an den Bildschirmanzeigeprozeß sendet, um das angezeigte Bild in Abhängigkeit von dieser Information auszurichten, wobei ein Teil von Symbolen und Legenden hiervon ausgenommen ist, die horizontal beibehalten werden, um ihre Lesbarkeit zu erleichtern, wobei die Legenden oder Symbole, die bestimmten Abschnitten des gespeicherten Straßennetzes oder der gespeicherten Topographie entsprechen, vorzugsweise parallel zu diesen Abschnitten angezeigt werden.

2. Vorrichtung nach Anspruch 1, dadurch gekenneichnet, daß sie zwei Anzeigebildschirme (8, 9) aufweist, deren einer einen Teil der digitalisierten Karte anzeigt, und deren anderer eine beliebige andere Information wie etwa eine andere Karte, einen Text, ein Bild oder ein Symbol anzeigt.

3. Vorrichtung nach Anspruch 2 oder 3, dadurch gekennzeichnet, daß das Anzeigen der Karte auf mehreren Ebenen organisiert ist, um das wahlfreie Anzeigen von diese Karte bildenden Objekten gemäß einem gewählten Maßstab zu ermöglichen, wobei die Symbole und Legenden einem vorbestimmten Verfahren unterworfen werden.

4. Vorrichtung nach einem der Ansprüche 1 bis 3, dadurch gekennzeichnet, daß sie durch eine Batterie unabhängig mit Energie versorgt wird.

5. Vorrichtung nach einem der Ansprüche 1 bis 3, dadurch gekennzeichnet, daß sie für das Mitnehmen in einem Fahrzeug ausgelegt ist, wobei die Versorgung der Vorrichtung mit elektrischer Energie von der Fahrzeugbatterie her erfolgt.

6. Vorrichtung nach einem der Ansprüche 1 bis 5, dadurch gekennzeichnet, daß sie eine Einrichtung aufweist, die das Speichern und Wiedergeben von örtlichen Multimedia-Informationen erlaubt.

7. Vorrichtung nach einem der Ansprüche 1 bis 6, dadurch gekennzeichnet, daß sie eine Einrichtung aufweist, die das Speichern und Anzeigen eines geplanten oder durchgeführten Reiseverlaufs erlaubt, insbesondere hinsichtlich der Kenngrößen Zeit, Entfernung und Höhe.

8. Vorrichtung nach einem der Ansprüche 1 bis 7, dadurch gekennzeichnet, daß sie eine Einrichtung aufweist, die das Anzeigen und Speichern beliebiger Informationen auf der digitalisierten Karte erlaubt, wobei die Informationen mit einem Register oder kalendarisch verknüpft sind.

## Claims

1. Portable appliance for displaying geographical digital maps, in particular topographical or road maps, recorded on magnetic or optical media, the appliance comprising in conventional manner a central processor unit (19) associated with memories (20) and input/output interfaces (11 to 17), means (4, 5) for reading magnetic or optical media, at least one display screen (8, 9) for displaying the digital map, control means (7, 10), and electrical power supply means, the appliance being characterized in that it further includes a compass (45) adapted to measure the angle between the orientation of the appliance and magnetic north, and to send corresponding information to the central unit (19), said central unit responding to said information by issuing a corresponding order to the screen display process to cause the displayed image to be oriented as a function of said information, with the exception of the symbols and the legends which are kept horizontal in order to make them readable, the legends or symbols associated with segments of the registered road or topographical network being displayed preferably parallel to such segments.

2. Appliance according to claim 1, characterized in that it includes two display screens (8, 9) suitable respectively for displaying a portion of the digital map and any other information such as another map, a text, a picture, or an icon.

3. Appliance according to claim 1 or claim 2, characterized in that the map display is organized in a plurality of levels to enable objects constituting the map to be displayed selectively depending on the scale chosen, the symbols and the legends being subjected to a determined specific treatment.

4. Appliance according to any one of claims 1 to 3, characterized in that it includes a self-contained power supply based on a battery.

5. Appliance according to any one of claims 1 to 3, characterized in that it is suitable for being taken on board a vehicle, with electrical power supply to the device then being provided from the battery of such vehicle.

6. Appliance according to any one of claims 1 to 5, characterized in that it includes means enabling location-specific multimedia information to be recorded and to be played back.

7. Appliance according to any one of claims 1 to 6, characterized in that it includes means suitable for recording and displaying a route that has been planned or performed, together, in particular, with its characteristics of time, of distance, and of change in altitude.

8. Appliance according to any one of claims 1 to 7, characterized in that it includes means enabling information of any kind to be displayed and recorded on the map, which information is associated with a directory or with a diary.
